# DEMANDE DE BREVET EUROPEEN

(11) **EP 4 831 011 A1**
(43) Date de publication de la demande: **28.10.2026**
(21) Numéro de dépôt: 26173709.2
(22) Date de dépôt: 21.04.2026
(51) Int. Cl.: B60R 19/48

(54) **BOUCLIER COMPORTANT UN SUPPORT DE CAPTEUR ET VEHICULE EQUIPE DE CE BOUCLIER**

(30) Priorité: 22.04.2025 FR 2504251
(71) Demandeur: Flexis, 92100 Boulogne Billancourt (FR)
(72) Inventeur: AESCHLIMANN, Jean-Louis, 78280 GUYANCOURT (FR); MOGNER, Regis, 78640 VILLIERS SAINT-FREDERIC (FR)
(74) Mandataire: Lavoix

(57) **Abrégé**

La présente invention concerne un bouclier (14) de véhicule (10) comportant une paroi de bouclier (16) prévue pour être positionnée devant une traverse (12), et au moins un capteur (18) monté sur un support de capteur (20), dans lequel le support de capteur (20) comporte un réceptacle (42) qui est prévu pour recevoir le capteur (18) de manière que la direction de détection (D1) du capteur (18) passe par une ouverture (32) aménagée dans la paroi de bouclier (16), le capteur (18) étant muni d'un câble de raccordement (38), caractérisé en ce que le support de capteur (20) comporte une platine (48) qui est agencée sur la face arrière (22) de la paroi de bouclier (16), la platine (48) étant munie, sur sa face arrière (54), d'au moins une entretoise (56) prévue pour s'interposer entre la face arrière (22) de la paroi de bouclier (16) et une face avant (26) de la traverse (12).

## Description

La présente invention concerne un bouclier de véhicule automobile équipé d'au moins un capteur et un véhicule automobile ainsi équipé.

La conception d'un véhicule automobile prévoit généralement que son bouclier avant ou arrière puisse être soumis à de petits chocs sans détérioration notable des fonctions présente sur le bouclier. On entend ici par petits chocs des chocs subis à une vitesse inférieure à 6 km/h.

Il est connu d'équiper un bouclier avec des capteurs, en particulier des capteurs de proximité, ou capteurs de parking, qui permettent de guider le conducteur du véhicule dans une manœuvre de parking ou autre. Le procédé d'assemblage du véhicule nécessite généralement d'équiper le bouclier avec les capteurs et leurs câbles, avant le montage du bouclier sur la caisse du véhicule.

Dans le cas de véhicules utilitaires, le bouclier peut être monté à l'avant d'une traverse sans que soit prévu un absorbeur d'énergie entre la traverse et la paroi du bouclier. De plus, la traverse peut comporter une découpe pour recevoir une partie d'un capteur ce qui crée des arêtes relativement coupantes. Il en résulte un risque important d'écrasement ou de sectionnement des câbles qui sont raccordés aux capteurs, lorsque le bouclier subit un choc.

Un but de l'invention est de proposer une solution pour réduire les risques d'écrasement ou de sectionnement des câbles de raccordement associés aux capteurs présents sur le bouclier.

A cet effet, l'invention a pour objet un bouclier de véhicule comportant une paroi de bouclier prévue pour être positionnée devant une traverse du véhicule, et au moins un capteur monté sur un support de capteur qui est fixé sur une face arrière de la paroi de bouclier, dans lequel le support de capteur comporte un réceptacle qui est prévu pour recevoir le capteur de manière que la direction de détection du capteur passe par une ouverture aménagée dans la paroi de bouclier, le capteur étant muni d'un câble de raccordement, caractérisé en ce que le support de capteur comporte une platine qui est agencée sur la face arrière de la paroi de bouclier, la platine étant munie, sur sa face arrière, d'au moins une entretoise prévue pour s'interposer entre la face arrière de la paroi de bouclier et une face avant de la traverse, de manière à protéger le câble de raccordement contre un écrasement entre la paroi de bouclier et la face avant de la traverse, en cas de choc avant contre la paroi de bouclier.

Le bouclier selon l'invention permet de faciliter le montage du capteur sur le bouclier, tout en protégeant les câbles de raccordement du capteur lors de petits chocs subis par le bouclier. Ceci est particulièrement avantageux pour un véhicule utilitaire qui comporte, à l'arrière, un seuil de chargement bas nécessitant d'agencer le bouclier arrière le plus bas possible et à proximité d'une traverse arrière.

Suivant d'autres aspects avantageux de l'invention, le bouclier comprend une ou plusieurs des caractéristiques suivantes, prises isolément ou suivant toutes les combinaisons techniquement possibles :
- la platine s'étend globalement dans un plan sensiblement orthogonal à la direction de détection du capteur ;
- la platine comporte au moins un élément de guidage apte à retenir le câble de raccordement contre la platine ;
- ledit au moins un élément de guidage comporte une languette élastique qui est agencée sur la face arrière de la platine et qui est configurée pour plaquer le câble de raccordement contre la face arrière de la platine ;
- le au moins un élément de guidage est réalisé d'une seule pièce avec la platine ;
- la platine comporte un premier tronçon qui s'étend suivant une première direction transversale à l'axe principal de détection du capteur, et un second tronçon qui s'étend suivant une seconde direction inclinée par rapport à la première direction transversale ;
- le premier tronçon de la platine comporte un premier élément de guidage et le second tronçon de la platine comporte un second élément de guidage ;
- le réceptacle est formé de plusieurs portions de paroi axiale qui sont réalisées d'une seule pièce avec la platine ;
- la au moins une entretoise se présente sous la forme d'un muret qui est réalisé d'une seule pièce avec la platine ;
- le premier tronçon comporte deux murets, de part et d'autre du premier élément de guidage, et le second tronçon comporte deux murets, de part et d'autre du second élément de guidage.

La présente invention propose aussi un véhicule automobile comportant une traverse et un bouclier selon l'une quelconque des caractéristiques précédentes, la platine étant agencée entre la face arrière de la paroi de bouclier et la face avant de la traverse.

L'invention apparaîtra plus clairement à la lecture de la description qui va suivre, donnée uniquement à titre d'exemple non limitatif, et faite en référence aux dessins dans lesquels :
[Fig. 1] la figure 1 est une vue en coupe axiale longitudinale selon le plan I-I qui représente schématiquement une partie de la face avant ou arrière d'un véhicule équipée d'un bouclier muni d'un support de capteur conforme aux enseignements de l'invention ;
[Fig. 2] la figure 2 est une vue en coupe axiale transversale selon le plan II-II qui représente schématiquement la partie de la face avant ou arrière du véhicule de la figure 1 ;
[Fig. 3] la figure 3 est une vue en perspective qui représente le support de capteur équipant le bouclier de la figure 1 ;
[Fig. 4] la figure 4 est une vue de dessus, selon la flèche F1 de la figure 3, qui représente le support de capteur équipant le bouclier de la figure 1.

Dans la suite de la description, des éléments identiques ou similaires seront dans certains cas désignés par les mêmes chiffres de référence.

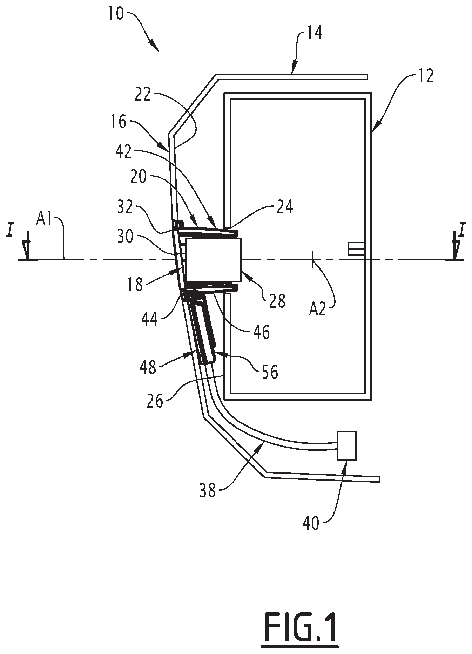

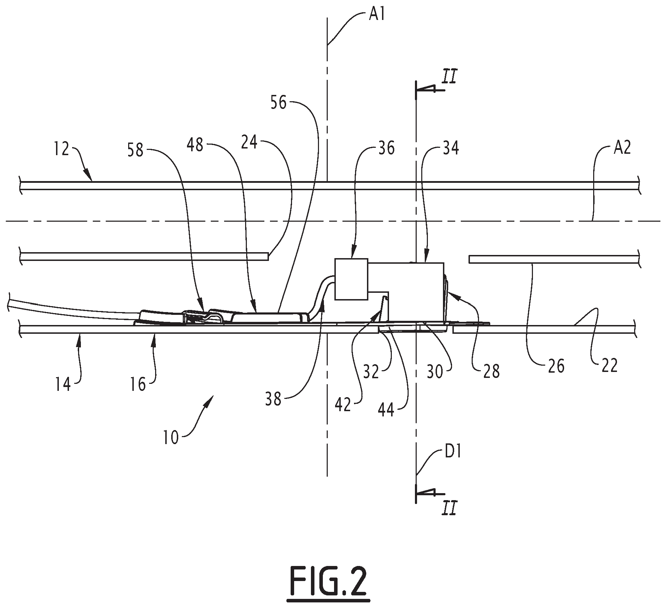

Sur les figures 1 et 2, on a représenté une partie d'un véhicule 10 automobile, par exemple une partie de l'extrémité avant ou arrière du véhicule 10.

On utilisera à titre non limitatif une orientation de l'arrière vers l'avant suivant une direction axiale longitudinale A1, ce qui correspond à une orientation de la droite vers la gauche en considérant la figure 1.

Le véhicule 10 comporte une traverse 12 qui s'étend suivant une direction transversale A2. La traverse 12 est une pièce structurelle fixe appartenant au châssis du véhicule 10.

Selon le mode de réalisation représenté, la traverse 12 se présente sous la forme d'un profilé métallique fermé, réalisé par un procédé de profilage à froid, désigné en anglais par l'expression « roll forming ».

Le véhicule 10 comporte un bouclier 14 qui forme une pièce d'habillage permettant notamment de dissimuler la traverse 12.

Le bouclier 14 comporte une paroi de bouclier 16, qui est positionnée devant la traverse 12, et un capteur 18 qui est monté sur un support de capteur 20, sur une face arrière 22 de la paroi de bouclier 16.

Selon le mode de réalisation représenté, la traverse 12 comporte une découpe 24 dans sa face avant 26 qui permet le passage du capteur 18, comme cela sera expliqué par la suite.

Le capteur 18 comporte un corps principal 28, ici de forme cylindrique, qui s'étend suivant la direction longitudinale A1 et une face de détection 30 à son extrémité avant.

La direction générale de détection D1 du capteur 18 est ici parallèle à la direction longitudinale A1 et elle passe par une ouverture 32 aménagée dans la paroi de bouclier 16.

Selon le mode de réalisation représenté, le capteur 18 est muni d'un organe de connexion 34 qui est complémentaire d'un premier connecteur 36 équipant une première extrémité d'un câble de raccordement 38.

L'organe de connexion 34 est ici déporté sur le côté du corps principal 28 de manière que la direction de connexion avec le premier connecteur 36 soit transversale A2 et de manière à permettre de faire partir le câble de raccordement 38 sur le côté du capteur 18.

Le câble de raccordement 38 peut être formé d'un faisceau de plusieurs câbles.

Le câble de raccordement 38 comporte, à une seconde extrémité, un second connecteur 40 qui permet de brancher le câble de raccordement 38 et de raccorder le capteur 18 à une unité électronique de commande (non représentée) du véhicule 10.

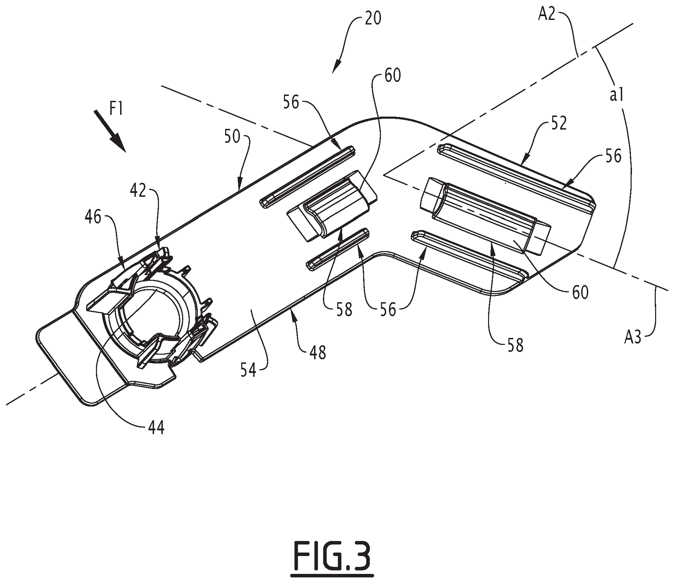

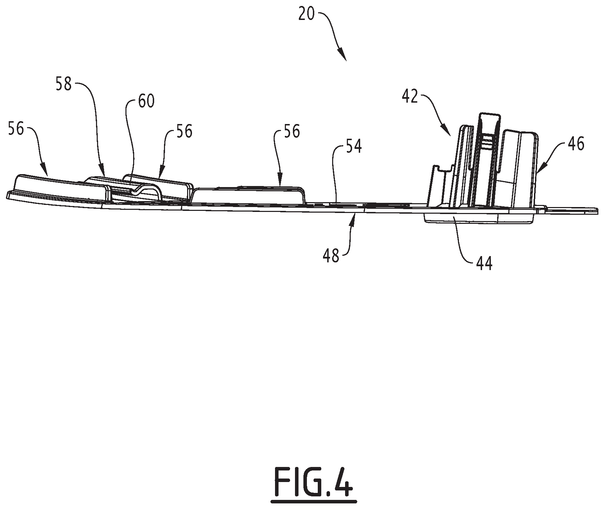

On décrit maintenant plus en détail le support de capteur 20, en considérant notamment les figures 3 et 4.

Le support de capteur 20 comporte un réceptacle 42 qui est prévu pour recevoir le corps principal 28 du capteur 18. Le réceptacle 42 comporte, à l'avant, un bourrelet annulaire 44 qui est reçu dans l'ouverture 32 et, à l'arrière, plusieurs portions de paroi axiale 46 qui servent à maintenir le capteur 18 transversalement et longitudinalement.

Avantageusement, le support de capteur 20 comporte une platine 48 qui est fixée contre la face arrière 22 de la paroi de bouclier 16. La platine 48 a globalement la forme d'une plaque qui s'étend ici selon un plan sensiblement transversal et orthogonal à la direction longitudinale A1 et/ou à la direction de détection D1. La platine 48 est donc agencée entre la face arrière 22 de la paroi de bouclier 16 et la face avant 26 de la traverse 12.

Selon le mode de réalisation représenté, la platine 48 comporte un premier tronçon 50, du côté du réceptacle 42, qui s'étend suivant la direction transversale A2, et un second tronçon 52, du côté opposé au réceptacle 42, qui s'étend suivant une direction inclinée A3 par rapport à la direction transversale A2.

La direction inclinée A3 décrit un angle a1 compris entre 30 et 60 degrés, de préférence environ 45 degrés, par rapport à la direction transversale A2.

La platine 48 est munie, sur sa face arrière 54, de plusieurs entretoises 56 qui sont prévues pour s'interposer longitudinalement entre la face arrière 22 de la paroi de bouclier 16 et la face avant 26 de la traverse 12, de manière à protéger le câble de raccordement 38 contre un écrasement entre la paroi de bouclier 16 et la face avant 26 de la traverse 12, en cas de choc avant contre la paroi de bouclier 16.

Les entretoises 56 se présentent ici sous la forme de murets qui sont réalisés d'une seule pièce avec la platine 48. Ces murets ont une épaisseur longitudinale suffisante pour protéger le câble de raccordement 38 en cas de choc sur la face avant de la paroi de bouclier 16, c'est-à-dire lorsque la paroi de bouclier 16 se déforme vers la face avant 26 de la traverse 12. Ils ont par exemple une épaisseur longitudinale sensiblement égale au diamètre du câble de raccordement 38, ou du faisceau de câbles.

Avantageusement, la platine 48 comporte des éléments de guidage 58 aptes à retenir le câble de raccordement 38 contre la platine 48.

Chaque élément de guidage 58 se présente ici sous la forme d'une languette élastique 60 qui est agencée sur la face arrière 54 de la platine 48 et qui est configurée pour plaquer le câble de raccordement 38 contre la face arrière 54 de la platine 48.

Chaque languette élastique 60 a ici un profil en forme de crochet et elle possède une flexibilité suffisante, au niveau de sa liaison avec la platine 48, pour se déformer élastiquement lors de l'insertion du câble de raccordement 38 entre la languette élastique 60 et la face arrière 54 de la platine 48.

De préférence, chaque élément de guidage 58 est réalisé d'une seule pièce avec la platine 48.

Selon le mode de réalisation représenté, le premier tronçon 50 de la platine 48 comporte un premier élément de guidage 58 et le second tronçon 52 de la platine 48 comporte un second élément de guidage 58.

Le premier tronçon 50 comporte ici deux murets, de part et d'autre du premier élément de guidage, et le second tronçon 52 comporte deux murets, de part et d'autre du second élément de guidage 58.

Avantageusement, le support de capteur 20 est entièrement réalisé d'une seule pièce, par exemple par moulage en matériau plastique. Bien entendu, le matériau choisi et la technologie de fabrication doit permettre de réaliser des entretoises 56 aptes à résister aux efforts de compression dus aux petits chocs sur le bouclier 14, de manière à assurer une protection suffisante du câble de raccordement 38.

On décrit maintenant un procédé d'assemblage du bouclier 14 selon l'invention.

Au cours d'une première étape, le capteur 18 est équipé du câble de raccordement 38. A cet effet, le premier connecteur 36 est branché sur l'organe de connexion 34 du capteur 18.

Au cours d'une seconde étape, le capteur 18 est monté dans le réceptacle 42 du support de capteur 20, en insérant le corps principal 28 du capteur 18 dans le réceptacle 42. Les portions de paroi axiale 46 peuvent comporter des éléments élastique telles que des lames flexibles qui permettent un emboîtement élastique du capteur 18 dans le réceptacle 42 et qui permettent de retenir le capteur 18 dans le réceptacle.

Selon une variante de réalisation, le capteur 20 peut être équipé du câble de raccordement 38 après qu'il soit monté dans le support de capteur 20.

Au cours d'une troisième étape, le câble de raccordement 38 est passé dans les éléments de guidage 58, de sorte que le câble de raccordement 38 suit la direction transversale A2, le long du premier tronçon 50 de la platine 48, puis la direction inclinée A3, le long du second tronçon 52 de la platine 48.

Au cours d'une quatrième étape, le support de capteur 20, équipé du capteur 18 et du câble de raccordement 38, est monté sur la face arrière 22 de la paroi de bouclier 16, le bourrelet annulaire 44 du réceptacle 42 étant engagé dans l'ouverture 32.

Le support de capteur 20 peut être fixé à la paroi de bouclier 16 par tout moyen approprié, par exemple par collage et/ou par emboîtement élastique.

Au cours d'une cinquième étape, le bouclier 14 est monté sur la face correspondante du véhicule 10, de manière que la paroi de bouclier 16 soit au moins en partie devant la traverse 12, et de manière que le capteur 18 soit en partie reçu à l'intérieur de la traverse 12, à travers la découpe 24.

La découpe 24, par exemple de forme oblongue suivant la direction transversale A2, permet de ménager un espace suffisant pour recevoir en partie le capteur 18 et le premier connecteur 36, qui sont en protrusion sur la face arrière 54 de la platine 48.

La découpe 24 permet aussi, lors d'un petit choc avant sur le bouclier 14, de laisser passer le capteur 18 sans qu'il soit comprimé entre la paroi de bouclier 16 et la traverse 12. En effet, lors d'un choc avant, la déformation de la paroi de bouclier 16 vers l'arrière provoque un déplacement du capteur 18 vers l'arrière. La découpe 24 permet donc d'éviter un écrasement du capteur 18 ce qui risquerait de le détériorer.

Au cours d'une sixième étape, le câble de raccordement 38 est branché sur un faisceau électrique du véhicule 10, ce qui permet d'assurer l'alimentation électrique du capteur 18 et la transmission des signaux de détection à l'unité électronique de commande.

L'invention a été décrite ici pour la fixation d'un seul capteur 18 sur un seul support de capteur 20 monté sur la paroi de bouclier 16.

Bien entendu, le bouclier 14 peut être équipé de plusieurs capteurs 18 montés dans plusieurs supports de capteur 20. Les supports de capteurs 20 peuvent être répartis transversalement le long de la paroi de bouclier 16 qui comporte plusieurs ouvertures 32 associées à plusieurs capteurs 18. La traverse 12 peut aussi comporter plusieurs découpes 24 associées aux différents capteurs 18.

Toute caractéristique décrite ci-dessus pour un mode de réalisation ou une variante est applicable aux autres modes de réalisation et variantes, pour autant que cela est techniquement possible.

## Revendications

1. Bouclier (14) de véhicule (10) comportant une paroi de bouclier (16) prévue pour être positionnée devant une traverse (12) du véhicule (10), et au moins un capteur (18) monté sur un support de capteur (20) qui est fixé sur une face arrière (22) de la paroi de bouclier (16),
dans lequel le support de capteur (20) comporte un réceptacle (42) qui est prévu pour recevoir le capteur (18) de manière que la direction de détection (D1) du capteur (18) passe par une ouverture (32) aménagée dans la paroi de bouclier (16), le capteur (18) étant muni d'un câble de raccordement (38),
dans lequel le support de capteur (20) comporte une platine (48) qui est agencée sur la face arrière (22) de la paroi de bouclier (16), la platine (48) étant munie, sur sa face arrière (54), d'au moins une entretoise (56) prévue pour s'interposer entre la face arrière (22) de la paroi de bouclier (16) et une face avant (26) de la traverse (12), de manière à protéger le câble de raccordement (38) contre un écrasement entre la paroi de bouclier (16) et la face avant (26) de la traverse (12), en cas de choc avant contre la paroi de bouclier (16), dans lequel la platine (48) comporte au moins un élément de guidage (58) apte à retenir le câble de raccordement (38) contre la platine (48),
dans lequel la platine (48) comporte un premier tronçon (50) qui s'étend suivant une première direction (A2) transversale à l'axe principal de détection (D1) du capteur (18), et un second tronçon (52) qui s'étend suivant une seconde direction (A3) inclinée par rapport à la première direction transversale (A2),
dans lequel le premier tronçon (50) de la platine (48) comporte un premier élément de guidage (58) et le second tronçon (52) de la platine (48) comporte un second élément de guidage (58).

2. Bouclier (14) selon la revendication précédente, **caractérisé en ce que** la platine (48) s'étend globalement dans un plan sensiblement orthogonal à la direction de détection (D1) du capteur (18).

3. Bouclier (14) selon la revendication 1 ou 2, **caractérisé en ce que** ledit au moins un élément de guidage (58) comporte une languette élastique (60) qui est agencée sur la face arrière (54) de la platine (48) et qui est configurée pour plaquer le câble de raccordement (38) contre la face arrière (54) de la platine (48).

4. Bouclier (14) selon l'une quelconque des revendications précédentes, **caractérisé en ce que** le au moins un élément de guidage (58) est réalisé d'une seule pièce avec la platine (48).

5. Bouclier (14) selon l'une quelconque des revendications précédentes, **caractérisé en ce que** le réceptacle (42) est formé de plusieurs portions de paroi axiale (46) qui sont réalisées d'une seule pièce avec la platine (48).

6. Bouclier (14) selon l'une quelconque des revendications précédentes, **caractérisé en ce que** la au moins une entretoise (56) se présente sous la forme d'un muret qui est réalisé d'une seule pièce avec la platine (48).

7. Bouclier (14) selon la revendication précédente, **caractérisé en ce que** le premier tronçon (50) comporte deux murets, de part et d'autre du premier élément de guidage (58), et le second tronçon (52) comporte deux murets, de part et d'autre du second élément de guidage (58).

8. Véhicule (10) automobile comportant une traverse (12) et un bouclier (14) selon l'une quelconque des revendications précédentes, la platine (48) étant agencée entre la face arrière (22) de la paroi de bouclier (16) et la face avant (26) de la traverse (12).
